# EUROPÄISCHE PATENTANMELDUNG

(11) **EP 1 388 457 A1**
(43) Veröffentlichungstag der Anmeldung: **11.02.2004**
(21) Anmeldenummer: 03017092.2
(22) Anmeldetag: 28.07.2003
(51) Int. Cl.: B60M 1/13

(54) **Vorrichtung zur Überwachung eines Fahrdrahtes auf Abnutzung**

(30) Priorität: 09.08.2002 DE 10236638
(71) Anmelder: SIEMENS AKTIENGESELLSCHAFT, 80333 München (DE)
(72) Erfinder: Köck, Günter, 90451 Nürnberg (DE)

(57) **Zusammenfassung**

Die Erfindung betrifft eine Vorrichtung zur Überwachung eines Fahrdrahtes auf Abnutzung oder Beschädigung, wobei der Fahrdraht rohrförmig ist und somit einen sich über die Länge des Fahrdrahtes erstreckenden Hohlraum aufweist. Es ist vorgesehen, dass sich im Hohlraum mindestens ein Medium befindet. Wenn infolge einer Beschädigung des Fahrdrahtes dieses Medium mit der Umgebung oder mit einem Pantographen eines vorbeifahrenden Schienenfahrzeugs in Kontakt kommt, wird durch dieses Medium eine Information an mindestens einen Sensor übermittelt, der mit dem Medium dazu in Verbindung steht. Der mindestens eine Sensor ist mit einer Anzeige- und Auswerteeinheit verbunden. Das Medium kann gasförmig, flüssig oder fest sein.

## Beschreibung

Die Erfindung betrifft eine Vorrichtung zur Überwachung eines Fahrdrahtes auf Abnutzung oder Beschädigung, wobei der Fahrdraht rohrförmig ist und somit einen sich über die Länge des Fahrdrahtes erstreckenden Hohlraum aufweist.

Solche hohlen Fahrdrähte sind bereits bekannt. Es ist auch schon vorgeschlagen worden, im Hohlraum einen isolierten Draht zu verlegen, durch den ein Strom fließt. Eine Beschädigung des Fahrdrahtes und auch des isolierten Drahtes im Inneren führt dann zu einem Kurzschluss im Stromkreis des isolierten Drahtes. Dieser Kurzschluss wird erkannt und als Indiz für eine Beschädigung des Fahrdrahtes gewertet.

Bei der bekannten Vorrichtung wird eine Abnutzung oder Beschädigung des Fahrdrahtes erst sehr spät erkannt.

Der Erfindung liegt daher die Aufgabe zugrunde, eine Vorrichtung zur Überwachung eines Fahrdrahtes anzugeben, die schneller und zuverlässiger als es bisher möglich war eine Beschädigung anzeigt.

Die Aufgabe wird gemäß der Erfindung dadurch gelöst, dass sich im Hohlraum mindestens ein Medium befindet, durch das, wenn es infolge einer Beschädigung des Fahrdrahtes mit der Umgebung und/oder mit einem Pantographen eines Schienenfahrzeugs in Kontakt kommt, eine Information an mindestens einen Sensor übermittelbar ist, der mit dem mindestens einen Medium in Verbindung steht, und dass der mindestens eine Sensor mit einer Auswerte- und Anzeigeeinheit verbunden ist.

Im Hohlraum kann sich ein Medium oder eine Kombination bzw. ein Gemisch mehrerer Medien befinden.

Mit der Erfindung wird der Vorteil erzielt, dass eine Beschädigung oder Abnutzung des Fahrdrahtes schon dann sicher erkannt wird, wenn der Fahrdraht nur ein relativ kleines Loch hat. Es reicht aus, wenn das im Hohlraum des Fahrdrahtes sich befindende Medium nur an einer Stelle mit der Umgebung und/oder mit dem Pantographen des Schienenfahrzeugs in Kontakt kommt. Je nach Auswahl geeigneter Medien wird eine Beschädigung oder Abnutzung des Fahrdrahtes direkt oder sobald der Pantograph eines Schienenfahrzeugs am Fahrdraht entlangstreicht erkannt.

Es ist eine schnelle und zuverlässige Überwachung des Fahrdrahtes auf Abnutzung oder Beschädigung gegeben.

Das Medium ist beispielsweise eine Flüssigkeit oder ein Gas oder ein Schüttgut, z.B. Sand. Es sind auch Mischungen möglich. "Gas" steht auch für ein Gasgemisch, insbesondere für Luft. Diese Substanzen haben unter anderem die Eigenschaft, dass sie durch ein mögliches Loch im Fahrdraht aus dem Hohlraum austreten.

Ein Flüssigkeits- oder Schüttgutverlust im Hohlraum ist beispielsweise an mindestens einen Füllstandssensor übermittelbar. Sobald ein solcher Füllstandssensor im Hohlraum einen Mediumverlust feststellt, ist damit ein zuverlässiger Hinweis auf ein Loch im Fahrdraht gegeben. Befindet sich im Hohlraum ein anderer gasförmiger Stoff als Luft, kann eine Konzentrationsabnahme, die durch einen Konzentrationssensor erkennbar ist, auf ein Loch im Fahrdraht hinweisen.

Nach einem anderen Beispiel ist ein Druckabfall im Hohlraum an mindestens einen Drucksensor übermittelbar. Wenn das Medium ein Gas, z.B. Luft, ist, ist auf diese Weise schnell und zuverlässig ein Gasverlust infolge eines Loches im Fahrdraht zu erkennen, sofern das Gas im ungestörten Betrieb einen Überdruck aufweist.

Beispielsweise ist das Medium ein Feststoff. Dabei ist in der Regel der Hohlraum vollständig mit diesem Feststoff gefüllt. Der rohrförmige Fahrdraht ummantelt zum Beispiel einen drahtförmigen Körper aus diesem Feststoff.

Beispielsweise ist das Medium lichtdurchlässig. An einem möglichen Loch im Fahrdraht in das Medium eindringendes Licht ist an einen optischen Sensor übermittelbar. Dort kann die Lichtbrechung oder die Polarisationsänderung des Lichtes im Medium erkannt werden. Das Medium kann dabei z.B. normale Luft sein. Es kann auch z.B. ein lichtdurchlässiger Feststoff sein.

Es wird der Vorteil erzielt, dass schon bei einer relativ kleinen Beschädigung des Fahrdrahtes, die nur dazu führt, dass Licht zum Medium vordringt, sofort die Abnutzung oder Beschädigung des Fahrdrahtes zuverlässig erkannt wird.

Nach einem anderen Beispiel hat das Medium eine andere Schallleitfähigkeit als das Material, aus dem der Fahrdraht im wesentlichen sonst besteht. Infolge einer Beschädigung des Fahrdrahtes kann mit dem Pantographen eines vorbeifahrenden Schienenfahrzeugs eine Schallwelle in das Medium eingebracht werden, die an mindestens einen Schallsensor übermittelbar ist. Der Schallsensor kann so gestaltet und angeordnet sein, dass er Schallwellen, die direkt in das Medium eingekoppelt werden, von anderen Schallwellen unterscheiden kann. Dazu kann er z.B. direkt mit dem Medium im Hohlraum des Fahrdrahtes in Verbindung stehen, während dieses Medium vom rohrförmigen Fahrdraht weitgehend schallisoliert ist.

Falls das Medium ein Gas, insbesondere Luft, ist, kann der Fahrdraht wie ein Hohlraumresonator wirken, so dass eine Abnutzung oder Beschädigung des Fahrdrahtes durch eine Schallmessung zu erkennen ist.

Das Medium ist beispielsweise ein Metall, das jedoch ein anderes Metall ist, als dasjenige Metall, aus dem der Fahrdraht im wesentlichen sonst besteht. Metalle eignen sich besonders gut, falls Schallwellen untersucht werden sollen.

Beispielsweise sind zwei oder mehrere Sensoren am Fahrdraht entlang verteilt angeordnet. Damit wird der Vorteil erzielt, dass die Übertragungswege für die Informationen relativ klein gehalten werden können, so dass eine Information, z.B. Druckverlust oder Polarisationsänderung, schnell und zuverlässig einen Sensor erreicht.

Die Daten des Sensors oder der Sensoren sind beispielsweise drahtlos aus der Entfernung von der Auswerteeinheit abfragbar. Dazu sind Sensoren mit Sendern ausgestatet. Es wird der Vorteil erzielt, dass die sehr langen Fahrdrähte mit einfachen Mitteln zu überwachen sind.

Nach einem anderen Beispiel kann jedoch auch eine Datenleitung den Sensor oder die Sensoren mit der Auswerteeinheit verbinden. Bei relativ kurzen Entfernungen zur nächsten Auswerteeinheit kann somit auf eine drahtlose Datenübermittlung verzichtet werden.

Mit der Vorrichtung nach der Erfindung wird insbesondere der Vorteil erzielt, dass Fahrdrähte, insbesondere Fahrdrähte der Eisenbahnstrecken, zuverlässig zu überwachen sind.

## Patentansprüche

1. Vorrichtung zur Überwachung eines Fahrdrahtes auf Abnutzung oder Beschädigung, wobei der Fahrdraht rohrförmig ist und somit einen sich über die Länge des Fahrdrahtes erstreckenden Hohlraum aufweist,
**dadurch gekennzeichnet, dass** sich im Hohlraum mindestens ein Medium befindet, durch das, wenn es infolge einer Beschädigung des Fahrdrahtes mit der Umgebung und/oder mit einem Pantographen eines Schienenfahrzeugs in Kontakt kommt, eine Information an mindestens einen Sensor übermittelbar ist, der mit dem mindestens einen Medium in Verbindung steht, und dass der mindestens eine Sensor mit einer Auswerte- und Anzeigeeinheit verbunden ist.

2. Vorrichtung nach Anspruch 1,
**dadurch gekennzeichnet, dass** das Medium lichtdurchlässig ist und in das Medium eindringendes Licht an einen optischen Sensor übermittelbar ist.

3. Vorrichtung nach Anspruch 2,
**dadurch gekennzeichnet, dass** durch den Sensor eine Lichtbrechung und/oder eine Polarisationsänderung des Lichtes im Medium erkennbar ist.

4. Vorrichtung nach einem der Ansprüche 1 bis 3,
**dadurch gekennzeichnet, dass** das Medium eine andere Schallleitfähigkeit hat als das Material, aus dem der Fahrdraht im wesentlichen sonst besteht, und dass, wenn das Medium mit einem Pantographen eines Schienenfahrzeugs in Kontakt kommt, eine infolge dieses Kontaktes in das Medium eingebrachte Schallwelle an mindestens einen Schallsensor übermittelbar ist.

5. Vorrichtung nach Anspruch 4,
**dadurch gekennzeichnet, dass** das Medium ein Gas ist und der Fahrdraht wie ein Hohlraumresonator wirkt.

6. Vorrichtung nach einem der Ansprüche 1 bis 4,
**dadurch gekennzeichnet, dass** das Medium ein Feststoff ist.

7. Vorrichtung nach Anspruch 6,
**dadurch gekennzeichnet, dass** der Feststoff ein anderes Metall ist, als das Metall, aus dem der Fahrdraht im wesentlichen sonst besteht.

8. Vorrichtung nach einem der Ansprüche 1 bis 4,
**dadurch gekennzeichnet, dass** das Medium eine Flüssigkeit oder ein Gas oder ein Schüttgut ist.

9. Vorrichtung nach Anspruch 8,
**dadurch gekennzeichnet, dass** ein Flüssigkeits- oder Schüttgutverlust im Hohlraum an mindestens einen Füllstandssensor übermittelbar ist.

10. Vorrichtung nach einem der Ansprüche 8 oder 9,
**dadurch gekennzeichnet, dass** ein Druckabfall im Hohlraum an mindestens einen Drucksensor übermittelbar ist.

11. Vorrichtung nach einem der Ansprüche 1 bis 10,
**dadurch gekennzeichnet, dass** zwei oder mehrere Sensoren am Fahrdraht entlang verteilt angeordnet sind.

12. Vorrichtung nach einem der Ansprüche 1 bis 11,
**dadurch gekennzeichnet, dass** Daten des Sensors oder der Sensoren drahtlos aus der Entfernung von einer Auswerteeinheit abfragbar sind.

13. Vorrichtung nach einem der Ansprüche 1 bis 11,
**dadurch gekennzeichnet, dass** eine Datenleitung den Sensor oder die Sensoren mit einer Auswerteeinheit verbindet.
